# EUROPÄISCHE PATENTSCHRIFT

(11) **EP 1 985 578 B1**
(45) Veröffentlichungstag und Bekanntmachung des Hinweises auf die Patenterteilung: **16.11.2011**
(21) Anmeldenummer: 08005074.3
(22) Anmeldetag: 19.03.2008
(51) Int. Cl.: B66F 9/20, B66F 9/075, B62B 3/04, B62B 5/06

(54) **Deichseleinheit für ein deichselgelenktes Flurförderzeug**
Drawbar unit for a drawbar industrial truck
Unité de timon pour un chariot de manutention guidé à l'aide d'un timon

(30) Priorität: 28.04.2007 DE 102007020112
(43) Veröffentlichungstag der Anmeldung: 29.10.2008
(73) Patentinhaber: Jungheinrich Aktiengesellschaft, 22047 Hamburg (DE)
(72) Erfinder: Fähndrich, Rainer, 22889 Tangstedt (DE)
(74) Vertreter: Graalfs, Edo

(56) Entgegenhaltungen:
- EP-A1- 2 050 652
- DE-A1-102004 003 331
- DE-U1-202006 015 451
- GB-A- 2 008 065
- GB-A- 2 443 732
- JP-A- 2002 145 597
- US-A1- 2007 137 904

## Beschreibung

Bei deichselgelenkten Flurförderzeugen wird zwischen Mitgeh- und Mitfahr-Fahrzeugen unterschieden. Bei Mitgeh-Fahrzeugen ist die Deichsel um eine horizontale Achse schwenkbar an einem Lenkschemel gelagert, der seinerseits um eine vertikale Achse drehbar ist. Bei Mitfahr-Fahrzeugen ist die Deichsel lediglich um eine vertikale Achse verschwenkbar. In beiden Fällen ist am Ende der Deichsel ein Deichselkopf vorgesehen, der Bedienelemente für die Betätigung der einzelnen Funktionen des Flurförderzeugs aufweist. Hierzu gehören insbesondere Fahrschalter, Heben- und Senken-Bedienelemente, Hupe, Notstopp usw.. Die vorliegende Erfindung bezieht sich auf Deichseleinheiten für Mitfahr-Flurförderzeuge.

Die Bediener der Flurförderzeuge haben naturgemäß eine unterschiedliche Körpergröße. Es ist daher zweckmäßig, wenn die Höhe des Deichselkopfes in der Betätigungsposition an die Körpergröße angepaßt werden kann. Aus DE 10 2004 003 331 A1 ist ein deichselgeführtes Mitgeh-Flurförderzeug bekannt geworden, bei dem die vertikale Position der horizontalen Schwenkachse in der Höhe verstellbar ist. Eine Vorrichtung gemäss dem Oberbegriff des Anspruchs 1 ist aus DE 202006015451 U bekannt.

Der Erfindung liegt die Aufgabe zugrunde, für ein Mitfahr-Flurförderzeug eine Höhenverstellbarkeit für die Deichseleinheit zu schaffen, die mit einfachen Mitteln eine stufenlose Verstellbarkeit ermöglicht.

Diese Aufgabe wird durch die Merkmale des Patentanspruchs 1 gelöst.

Bei der erfindungsgemäßen Deichseleinheit ist der Deichselkopf mit dem oberen Ende eines länglichen Führungsbauteils verbunden, an dem ein oberer Abschnitt der Lenkwelle axial geführt ist. Am Führungsbauteil ist ein Hebel schwenkbar gelagert, der mit einem Arm in eine achsparallele Führungsbahn einer Lenkwelle so eingreift, daß eine Drehverbindung hergestellt ist. Verstellmittel greifen an dem Hebel an, um den Arm wahlweise klemmend mit der Lenkwelle in Eingriff zu bringen und das Führungsbauteil und die Lenkwelle axial und in Drehrichtung zu koppeln.

Wird der Klemmeingriff zwischen dem Hebel und der Lenkwelle aufgehoben, kann der Deichselkopf in Grenzen beliebig auf eine gewünschte Höheneinstellung gebracht werden. Die Betätigung des Hebels erfolgt über geeignete Verstellmittel, um den Klemmeingriff herzustellen bzw. zu lösen.

Nach einer Ausgestaltung der Erfindung ist das Führungsbauteil ein Rohr oder eine Hülse, und der Hebelarm erstreckt sich durch eine Öffnung im Rohr oder in der Hülse hindurch. Die Lagerung des Hebels erfolgt vorzugsweise an einem Lagerbauteil, das am Führungsbauteil außen angebracht ist.

Nach einer anderen Ausgestaltung der Erfindung ist ein zweiarmiger Hebel vorgesehen, dessen erster Arm mit der Lenkwelle und dessen zweiter Arm mit den Verstellmitteln zusammenwirkt. Die Verstellmittel können nach einer weiteren Ausgestaltung der Erfindung von einer Gewindespindel gebildet sein, die eine Handhabe am äußeren Ende aufweist. Die Gewindespindel sitzt in einem Gewinde des Hebels und stützt sich mit dem inneren Ende am Führungsbauteil ab. Durch Drehen der Gewindespindel läßt sich mithin je nach Drehrichtung der Klemmeingriff herstellen bzw. aufheben.

Nach einer anderen Ausgestaltung der Erfindung ist die Führungsbahn von einer achsparallelen Nut in der Lenkwelle gebildet.

Um die Höhenverstellung zu erleichtern, sieht eine weitere Ausgestaltung der Erfindung vor, daß mit einem Anbringungspunkt einer Lenkwelle eine Gasdruckfeder verbunden ist, deren anderer Anbringungspunkt am Führungsbauteil liegt. Es versteht sich, daß anstelle einer Gasdruckfeder auch eine andere Feder eingesetzt werden kann.

Nach einer weiteren Ausgestaltung der Erfindung ist vorgesehen, daß die Gasdruckfeder bzw. auch eine andere Feder über einen Zapfen an der Lenkwelle angebracht ist und der Zapfen mit Anschlägen zusammenwirkt, die den Drehwinkel der Lenkwelle begrenzen. Die Begrenzung kann nach einer weiteren Ausgestaltung der Erfindung von einer Ausnehmung in einem stationären Anschlagrohr gebildet werden, das die Lenkwelle in radialem Abstand umgibt.

Ein Ausführungsbeispiel der Erfindung wird nachfolgend anhand von Zeichnungen näher erläutert.
- Fig. 1: zeigt einen Schnitt durch eine Deichseleinheit nach der Erfindung gemäß Fig. 2 entlang der Linie 1-1.
- Fig. 2: zeigt die Rückansicht der Deichseleinheit nach der Erfindung.
- Fig. 3: zeigt einen Schnitt durch die Darstellung nach Fig. 2 entlang der Linie 3-3.
- Fig. 4: zeigt eine ähnliche Darstellung wie Fig. 2, jedoch unter Weglassung des Deichselkopfes und eines die Deichselwelle umgebenden Gehäuses.
- Fig. 5: zeigt einen Schnitt durch die Darstellung nach Fig. 4 entlang der Linie 5-5.
- Fig. 6: zeigt perspektivisch die Deichseleinheit gemäß Fig. 4.

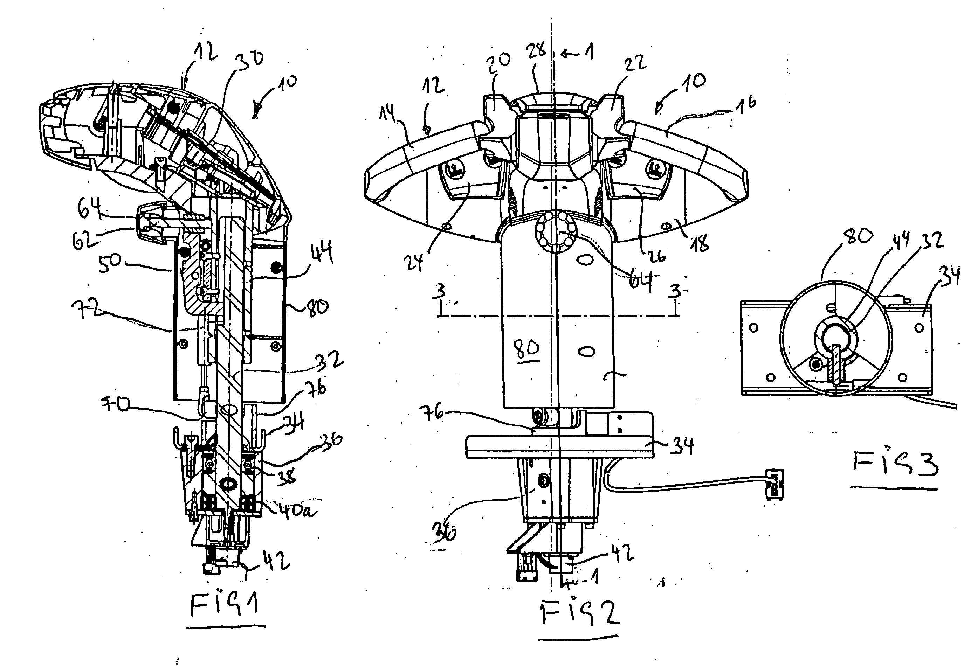

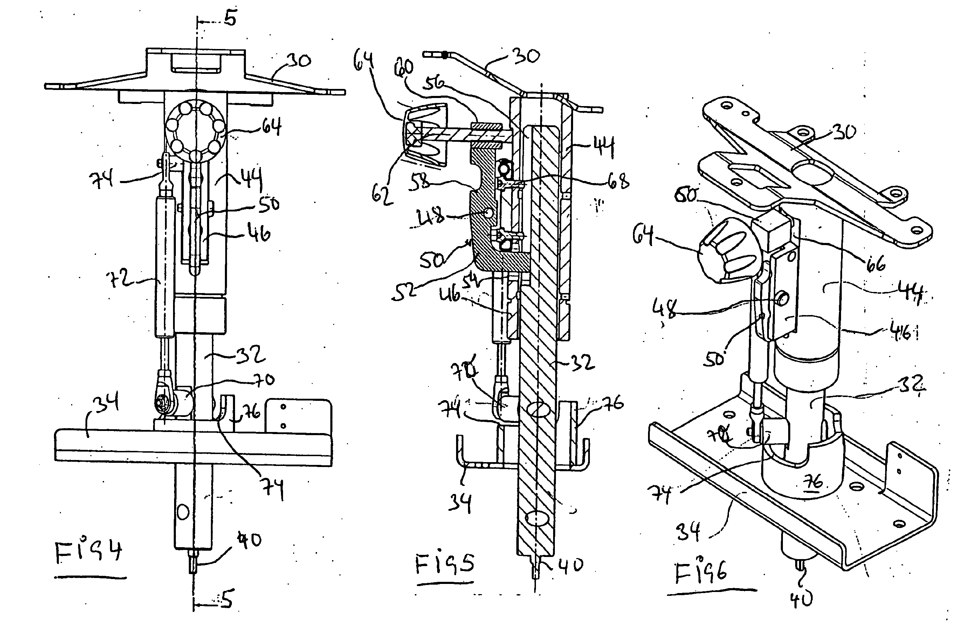

In den Figuren 1 und 2 ist eine komplette Deichseleinheit 10 dargestellt, die vorgefertigt in ein nicht gezeigtes Flurförderzeug eingebaut wird. Die Deichseleinheit 10 weist einen Deichselkopf 12 auf mit zwei Griffen 14, 16, die auf die gegenüberliegenden Seiten an einem Tragabschnitt 18 angebracht sind und mit dem freien Ende zu Fahrschaltern 20, 22 hin gerichtet sind. Am Tragabschnitt sind Bedienelemente 24, 26 für das Heben und Senken eines Lastaufnahmemittels des nicht gezeigten Flurförderzeugs angebracht. Die Fahrschalter 20, 22 sind an einem mittleren Abschnitt 28 des Deichselkopfes 12 angebracht, der sich vom Tragabschnitt 18 nach hinten, d.h. zur Bedienungsperson hin erstreckt. Weitere Einzelheiten des Deichselkopfes sollen nicht erörtert werden, da sie Stand der Technik sind. Tragabschnitt 18 und mittlerer Abschnitt 28 sind aus zwei Schalenabschnitten zusammengesetzt, was in Fig. 1 zu erkennen ist. Die Tragfunktion übernimmt ein Tragblech 30, das näher in den Fig. 4 bis 6 dargestellt ist.

In den Figuren 4 bis 6 erkennt man eine Lenkwelle 32, welche sich nach unten durch eine Flanschplatte 34 hindurch erstreckt. Die Flanschplatte ist mit dem nicht gezeigten Rahmen des Flurförderzeugs verbunden und hält ihrerseits einen Lagertopf 36 mit zwei Wälzlagern 38, 40a. Die Lenkwelle 32 ist mithin drehbar, jedoch axial fest gelagert. Ein Zapfen 40 der Lenkwelle 32 am unteren Ende erstreckt sich in einen Sensor 42 hinein, der ebenfalls mit dem Lagertopf 36 verbunden ist und dient zur Erzeugung eines Soll-Lenksignals für eine nicht gezeigte elektrische Lenkung des nicht gezeigten Flurförderzeugs.

Insbesondere in den Figuren 4 und 5 ist zu erkennen, daß sich die Lenkwelle im oberen Bereich in eine Hülse 44 hineinerstreckt. An dem oberen Ende der Hülse 44 ist das bereits beschriebene Tragblech 30 angebracht. Die Hülse 44 ist daher fest mit dem Deichselkopf 12 verbunden. Ein Lagerbauteil 46 ist außen an der Hülse 44 angebracht. Das gegabelte Lagerbauteil 46 lagert mittels eines Drehstiftes 48 einen zweiarmigen Hebel 50. Der untere Arm 52 des Hebels 50 ist L-förmig, wobei ein annähernd horizontaler Schenkel sich durch eine Öffnung 54 der Hülse 44 in das Innere hinein erstreckt. Der Schenkel greift in eine achsparallele Nut 56 der Lenkwelle 32 ein. Auf diese Weise ist eine Drehverbindung zwischen Lenkwelle 32 und Hülse 44 hergestellt. Um einen Totweg zu vermeiden, ist diese Führung möglichst toleranzarm.

Im oberen Bereich des oberen Arms 58 des Hebels 50 ist eine Mutter 60 ausgebildet, in die eine Gewindespindel 62 eingeschraubt ist. Am äußeren Ende weist die Gewindespindel einen Drehknopf 64 auf, und am inneren Ende stützt sie sich auf der Außenseite der Hülse 44 ab, die im Bereich der Abstützung eine Abflachung aufweist, wie sich bei 66 in Fig. 6 erkennen läßt.

In Fig. 5 ist die Befestigung des Lagerbauteils 46 mit Hilfe von zwei Schrauben 68 gezeigt.

Die Relativlage der Mutter 60 bezüglich der Hülse 44 bestimmt, ob der untere Hebelarm 52 mit dem Boden der Nut 56 zusammenwirkt und damit eine klemmende Verbindung zwischen Hülse 44 und Lenkwelle 32 herstellt oder eine axiale Verschiebung zwischen diesen beiden Teile zuläßt. Im letzteren Fall kann durch ein Ziehen oder Drücken am Deichselkopf 12 dieser in vertikaler Richtung verstellt werden. Soll eine kraftschlüssige Verbindung zwischen diesen beiden Teilen hergestellt werden, wird der Drehknopf 64 solange gedreht, bis eine klemmende Verbindung hergestellt ist.

Im Bereich des Flanschbleches 34 ist mit der Lenkwelle 32 ein radialer Zapfen 70 verbunden. An dem Zapfen ist das eine Ende einer Gasdruckfeder 72 angebracht. Ein weiterer Zapfen 74 ist mit dem Lagerbauteil 46 verbunden. Mithin ist zwischen der Hülse 44 und der Lenkwelle 32 eine Vorspannung aufgebaut, welche den Deichselkopf 12 nach oben vorspannt.

Der Zapfen 70 bewegt sich innerhalb einer Ausnehmung 74, die in einem Rohrstück 76 gebildet ist, das mit einem Ende auf der Flanschplatte 34 angebracht ist und die Lenkwelle 32 koaxial umgibt. Die Enden der Ausnehmung 74 bestimmen den maximalen Schwenkwinkel der Lenkwelle 32.

Wie aus den Figuren 1 und 2 hervorgeht, ist die beschriebene Deichseleinheit unterhalb des Lastkopfes 12 von einem rohrförmigen Gehäuse 80 umgeben, das sich bis zum Rohrabschnitt 76 nach unten erstreckt und einen Durchgang aufweist für die Gewindespindel 62. Der Drehknopf 64 kann an der Verkleidung 80 gelagert sein.

## Patentansprüche

1. Deichseleinheit für ein deichselgelenktes Flurförderzeug, bei der ein Deichselkopf mit einer vertikalen Lenkwelle gekoppelt ist, die gegebenenfalls mit einem Drehwinkelgeber für eine elektrische Lenkung des Flurförderzeugs zusammenwirkt, wobei die Lenkwelle in einer stationären Lageranordnung des Flurförderzeugs drehbar und axial fest lagerbar ist, wobei der Deichselkopf (12) mit dem oberen Ende eines länglichen Führungsbauteils verbunden ist, an dem ein oberer Abschnitt der Lenkwelle (32) axial geführt ist, **dadurch gekennzeichnet daß**, am Führungsbauteil ein Hebel (50) schwenkbar gelagert ist, der mit einem Arm (52) in eine achsparallele Führungsbahn an der Lenkwelle (32) so engreift, daß eine Drehverbindung hergestellt ist und Verstellmittel an dem Hebel (50) angreifen, um den Arm (52) wahlweise klemmend mit der Lenkwelle (32) in Eingriff zu bringen und Führungsbauteil und Lenkwelle (32) auch axial zu koppeln.

2. Deichseleinheit nach Anspruch 1, **dadurch gekennzeichnet, daß** das Führungsbauteil ein Rohr oder eine Hülse (44) ist und der Hebelarm (52) durch eine Öffnung (54) im Rohr oder in der Hülse (44) hindurchgeführt ist.

3. Deichseleinheit nach Anspruch 1 oder 2, **dadurch gekennzeichnet, daß** an dem Führungsbauteil ein Lagerbauteil (46) für den Hebel (50) angebracht ist.

4. Deichseleinheit nach einem der Ansprüche 1 bis 3, **dadurch gekennzeichnet, daß** ein zweiarmiger Hebel (50) vorgesehen ist, dessen erster Arm (52) mit der Lenkwelle (32) zusammenwirkt und dessen zweiter Arm (58) mit einer Mutter (60) zusammenwirkt.

5. Deichseleinheit nach Anspruch 4, **dadurch gekennzeichnet, daß** das Verstellmittel eine Gewindespindel (62) mit einer Handhabe (64) am äußeren Ende aufweist, die in ein Gewinde des Hebels (50) geschraubt und deren inneres Ende an dem Führungsbauteil abgestützt ist.

6. Deichseleinheit nach einem der Ansprüche 1 bis 5, **dadurch gekennzeichnet, daß** die Führungsbahn von einer achsparallelen Nut (56) der Lenkwelle (32) gebildet ist.

7. Deichseleinheit nach einem der Ansprüche 1 bis 6, **dadurch gekennzeichnet, daß** zwischen einem Anbringungspunkt an der Lenkwelle (32) und einem Anbringungspunkt an dem Führungsbauteil eine Gasdruckfeder (72) angeordnet ist.

8. Deichseleinheit nach Anspruch 7, **dadurch gekennzeichnet, daß** die Gasdruckfeder (72) über einen radialen Zapfen (70) an der Lenkwelle (32) angebracht ist und der Zapfen (70) mit Anschlägen zusammenwirkt, um den Drehwinkel der Lenkwelle (32) zu begrenzen.

9. Deichseleinheit nach Anspruch 8, **dadurch gekennzeichnet, daß** die Anschläge von einer Ausnehmung in einem stationären Anschlagrohr (76) gebildet sind, das die Lenkwelle mit radialem Abstand umgibt.

10. Deichseleinheit nach einem der Ansprüche 1 bis 9, **dadurch gekennzeichnet, daß** die Lenkwelle (32) in einer Lageranordnung (36) drehbar, jedoch axial fest gelagert ist und die Lageranordnung mit Lenkwelle, Führungsbauteil und an einem Führungsbauteil angebrachtem Deichselkopf eine separate Einheit bilden, die in ein Flurförderzeug einbaubar ist.

## Claims

1. Drawbar unit for a drawbar governed floor conveyor, in which a drawbar head is coupled to a vertical steering shaft, which optionally co-operates with a swiveling angle transmitter for an electronic steering of the floor conveyor, wherein the steering shaft can be rotatably and axially fixedly mounted in a stationary bearing arrangement of the floor conveyor, wherein the drawbar head (12) is connected to the upper end of a longitudinal guiding member, on which an upper portion of the steering shaft (32) is axially guided, **characterized in that** a lever (50) is pivotably mounted on the guiding member, which engages with an arm (52) into an axis parallel guiding channel on the steering shaft (32) such that a rotary union is provided, and adjustment means act on the lever (50) in order to selectively bring the arm (52) into clamping engagement with the steering shaft (32) and to couple guiding member and steering shaft (32) also axially.

2. Drawbar unit according to claim 1, **characterized in that** the guiding member is a pipe or a sleeve (44) and the lever arm (52) is guided through an opening (54) in the pipe or in the sleeve (44).

3. Drawbar unit according to claim 1 or 2, **characterized in that** a bearing member (46) for the lever (50) is attached on the guiding member.

4. Drawbar unit according to any one of claims 1 to 3, **characterized in that** a two arm lever (50) is provided, whose first arm (52) co-operates with the steering shaft (32), and whose second arm (58) co-operates with a nut (60).

5. Drawbar unit according to claim 4, **characterized in that** the adjustment means features a thread spindle (62) with a handle (64) at the outer end, which is screwed into a thread of the lever (50) and whose inner end is supported on the guiding member.

6. Drawbar unit according to any one of claims 1 to 5, **characterized in that** the guiding channel is formed by an axis parallel groove (56) of the steering shaft (32).

7. Drawbar unit according to any one of claims 1 to 6, **characterized in that** a gas pressure spring (72) is arranged between an attachment point on the steering shaft (32) and an attachment point on the guiding member.

8. Drawbar unit according to claim 7, **characterized in that** the gas pressure spring (72) is attached on the steering shaft (32) via a radial spigot (70) and the spigot (70) co-operates with stops in order to limit the swiveling angle of the steering shaft (32).

9. Drawbar unit according to claim 8, **characterized in that** the stops are formed by a recess in a stationary stopper pipe (76), which surrounds the steering shaft in a radial distance.

10. Drawbar unit according to any one of claims 1 to 9, **characterized in that** the steering shaft (32) is mounted in a bearing arrangement (36) rotatably, but axially fixedly, and the bearing arrangement with steering shaft, guiding member and drawbar head attached on a guiding member form a separate unit which can be installed into a floor conveyor.

## Revendications

1. Unité de timon pour un chariot de manutention dirigé par un timon, dans laquelle une tête de timon est raccordée à un arbre de direction vertical qui coopère éventuellement avec un capteur d'angle de rotation pour une direction électrique du chariot de manutention, dans laquelle l'arbre de direction peut être logé de manière à pouvoir tourner et fixe axialement dans un agencement de palier stationnaire du chariot de manutention, dans laquelle la tête de timon (12) est reliée à l'extrémité supérieure d'un composant de guidage longitudinal sur lequel une section supérieure de l'arbre de direction (32) est guidée de manière axiale, **caractérisée en ce qu'**un levier (50) est logé à pivotement sur le composant de guidage, lequel s'engrène avec un bras (52) dans une voie de guidage parallèle à l'axe sur l'arbre de direction (32) de sorte qu'une connexion rotative est créée et des moyens de réglage sont appliqués sur le levier (50) pour amener le bras (52) en engagement avec l'arbre de direction (32) au choix de manière à le bloquer et raccorder également axialement composant de guidage et arbre de direction (32).

2. Unité de timon selon la revendication 1, **caractérisée en ce que** le composant de guidage est un tuyau ou un manchon (44) et le bras de levier (52) est guidé à travers une ouverture (54) dans le tuyau ou dans le manchon (44).

3. Unité de timon selon la revendication 1 ou 2, **caractérisée en ce qu'**un composant de palier (46) pour le levier (50) est monté sur le composant de guidage.

4. Unité de timon selon l'une quelconque des revendications 1 à 3, **caractérisée en ce qu'**un levier à deux bras (50) dont le premier bras (52) coopère avec l'arbre de direction (32) et dont le second bras (58) coopère avec un écrou (60) est prévu.

5. Unité de timon selon la revendication 4, **caractérisée en ce que** le moyen de réglage présente une broche de filetage (62) avec une poignée (64) à l'extrémité extérieure qui est vissée dans un filetage du levier (50) et dont l'extrémité intérieure est appuyée sur le composant de guidage.

6. Unité de timon selon l'une quelconque des revendications 1 à 5, **caractérisée en ce que** la voie de guidage est formée par une rainure parallèle à l'axe (56) de l'arbre de direction (32).

7. Unité de timon selon l'une quelconque des revendications 1 à 6, **caractérisée en ce qu'**un ressort à pression gazeuse (72) est disposé entre un point d'attache sur l'arbre de direction (32) et un point d'attache sur le composant de guidage.

8. Unité de timon selon la revendication 7, **caractérisée en ce que** le ressort à pression gazeuse (72) est monté sur l'arbre de direction (32) par le biais d'un tourillon radial (70) et le tourillon (70) coopère avec des butées pour limiter l'angle de rotation de l'arbre de direction (32).

9. Unité de timon selon la revendication 8, **caractérisée en ce que** les butées sont formées par un évidement dans un tuyau de butée stationnaire (76) qui entoure l'arbre de direction avec un écart radial.

10. Unité de timon selon l'une quelconque des revendications 1 à 9, **caractérisée en ce que** l'arbre de direction (32) est logé de manière à pouvoir tourner, mais fixe axialement dans un agencement de palier (36) et l'agencement de palier forme avec l'arbre de direction, le composant de guidage et la tête de timon montée sur un composant de guidage une unité séparée qui peut être encastrée dans un chariot de manutention.
